# EUROPÄISCHE PATENTANMELDUNG

(11) **EP 1 415 876 A1**
(43) Veröffentlichungstag der Anmeldung: **06.05.2004**
(21) Anmeldenummer: 03022088.3
(22) Anmeldetag: 02.10.2003
(51) Int. Cl.: B60T 8/00, G01N 19/02

(54) **Verfahren zur Ermittlung des Kraftschlussbeiwertes zwischen Reifen und Fahrbahn**

(30) Priorität: 01.11.2002 DE 10251381
(71) Anmelder: Continental Aktiengesellschaft, 30165 Hannover (DE)
(72) Erfinder: Kilsch, Armin Ralph, 30559 Hannover (DE); Trabelsi, Ahmed, 30171 Hannover (DE); Harting, Hans-Joachim, 30966 Hemmingen (DE); Schröder, Carsten, 31626 Hassbergh (DE); Heimann, Bodo, Prof. ,Dr., 31515 Wunstorf (DE); Härtel, Volker, Dr., 82110 Germering (DE)

(57) **Zusammenfassung**

Verfahren zur Ermittlung des Kraftschlußbeiwertes zwischen einem Reifen eines Fahrzeuges und der Fahrbahn, bei dem insbesondere am Fahrzeug angeordnete Sensoren mehrere aus einer ersten Gruppe von unterschiedlichen variablen Zustandsparametern des Fahrzeugs und der Fahrzeugumgebung detektieren und mehrere dieser variablen Zustandsparameter in Form von Signalwerten einer Verarbeitungseinheit zuführen, bei dem der Verarbeitungseinheit darüberhinaus parallel mehrere aus einer zweiten Gruppe von nicht veränderbaren Zustandsparametern des Fahrzeugs und der Fahrzeugumgebung in Form von vorgegebenen Festwerten zur Verfügung gestellt werden und bei dem die als Signalwerte oder Festwerte in ihrer Gesamtheit nicht relational oder analytisch einen Reibschlußbeiwert beschreibend vorliegenden Zustandsparameter der ersten und der zweiten Gruppe in der Verarbeitungseinrichtung zur Bildung einer oder mehrerer Kennfeldgruppen zueinander in Beziehung gesetzt, im Hinblick auf eine reproduzierbare Plausibilität überprüft, und danach abhängig von diskreten augenblicklichen Kombinationen von Kennfeldkonstellationen bzw. Signal- und Festwertkonstellationen ein definierter augenblicklich plausibler Reibschlußbeiwert prognostiziert wird, wonach dieser augenblickliche Reibschlußbeiwert einem Fahrzeugregelsystem, beispielsweise einem ABS- oder ESP-System als Start- bzw. Referenzwert vorgegeben wird

## Beschreibung

Die Erfindung betrifft ein Verfahren zur Ermittlung des Kraftschlußbeiwertes zwischen einem Reifen eines Fahrzeuges und der Fahrbahn, bei dem aus mehreren unterschiedlichen variablen Zustandsparametern des Fahrzeugs und der Fahrzeugumgebung und aus mehreren nicht veränderbaren Zustandsparametern des Fahrzeugs und der Fahrzeugumgebung in Form von vorgegebenen Festwerten ein definierter augenblicklich Reibschlußbeiwert prognostiziert und einem Antiblockiersystem (ABS) oder einem System eines Elektronischen Stabilitäts Programms (ESP) als Start- bzw. Referenzwert vorgegeben wird.

Bei herkömmlichen ABS-Systemen - auch bei üblichen ESP-Systemen - ist es erforderlich, einen Kraftschlußbeiwert zwischen Reifen und Fahrbahn abzuschätzen und diesen dann dem der weiteren Regelung des Bremsdrucks zu Grunde liegenden Algorithmus zunächst vorzugeben. Üblicherweise wird der zunächst angenommene Kraftschlußbeiwert bzw. der Radschlupf aus den Signalen der Raddrehzahlsensoren so ermittelt, das zum Beispiel eine Fahrzeugreferenzgeschwindigkeit aus dem am schnellsten, nicht angetriebenen Rad unter Berücksichtigung von Lenkeinschlägen detektiert wird und der Schlupf eines Rades aus dem Verhältnis zwischen gemessener Raddrehzahl des jeweiligen Rades und der Fahrzeugreferenzgeschwindigkeit errechnet wird. Hiebei wird innerhalb der Rechnung ein erster Kraftschlußbeiwert ermittelt bzw. abgeschätzt, der dann der weiteren Rechnung zu Grunde liegt. Dieser durch eine Rechnung abgeschätzte Kraftschlußbeiwert stellt jedoch nur eine Näherung des tatsächlich und physikalisch vorhandenen augenblicklichen Kraftschlußbeiwertes dar und führt zu dem Nachteil, dass der Regeleingriff auf den Bremsdruck in den ersten Regelantworten teilweise zu heftig erfolgt und das Einschwingen der Regelung auf den tatsächlich bestmöglich angenäherten Schlupfwert erst nach mehreren stark überschwingenden Regelungszyklen erreicht wird.

Die DE 198 55 332 A1 schlägt ein Verfahren und eine Vorrichtung zum Bestimmen des Kraftschlusses eines Reifens eines Fahrzeuges, bei dem die Auswertung der Daten von Fahrdynamiksensoren mit einem Fahrdynamik-Simulationsmodell erfolgt und bei dem die Auswertung der Daten von Fahrbahnsensoren Reifenkennlinien berücksichtigt, die im Laufe der Betriebszeit an das aktuelle Reifenverhalten angepasst werden. Durch ein solches Verfahren werden also vorgebene Reifenkennfelder / Reifenkennlinien mit Hilfe aktueller Sensorsignale auf den vermuteten Istzustand "gefittet" und in der dann angepassten Form der Ermittlung des Reibwertes bzw. des Kraftschlusses zugrunde gelegt. Es handelt sich hierbei also um eine modellbasierte Regelung, die lediglich anhand von erkannten Parameteränderungen "nachgeführt" wird.

Die DE 199 03 932 A1 offenbart ein Verfahren und eine Vorrichtung zum Ermitteln einer Kenngröße für einen maximalen Reibkraftbeiwert zwischen Reifen eines Fahrzeuges und der Fahrbahn, der beispielsweise für eine Abstandsregelung genutzt werden kann. Hierbei wird eine logische Verknüpfung von Datenausgabewerten von im Fahrzeug vorhandener Sensorik, auch unter Nutzung von unscharfer Logig und unter Berücksichtigung aus Häufigkeitsverteilungen ermittelter Klassen und Kennwerte, zur Abschätzung des momentan maximalen Reibkraftbeiwertes genutzt. Diese Verfahren erlaubt jedoch nur eine grobe Unterteilung des Reibwertes etwa in die Klassen "hoch", "mittel", und "niedrig" und legt diese Einteilung der Voreinstellung von Abstands- oder Bremsregelungen zu Grunde.

Der Erfindung lag die Aufgabe zu Grunde, ein Verfahren und eine Vorrichtung bereitzustellen mit denen ein solcher Kraftschlußbeiwert abgeschätzt oder prognostiziert werden kann, der den tatsächlich vorhandenen augenblicklichen physikalischen Gegebenheiten bestmöglich, in ausreichend feiner Abstufung und bereits in seinem Anfangswert entspricht, wobei das Verfahren ungewünscht heftige Regelantworten vermeidet und somit ein wesentlich schnelleres Einschwingen auf das Regeloptimum ermöglicht.

Gelöst wird diese Aufgabe durch ein Verfahren nach den Merkmalen des Hauptanspruchs. Weitere vorteilhafte Ausbildungen sind in den Unteransprüchen erfasst.

Hierbei erfolgt die Ermittlung des Kraftschlußbeiwertes zwischen einem Reifen eines Fahrzeuges und der Fahrbahn dadurch, dass insbesondere am Fahrzeug angeordnete Sensoren mehrere aus einer ersten Gruppe von unterschiedlichen variablen Zustandsparametern des Fahrzeugs und der Fahrzeugumgebung detektieren, insbesondere mehrere Zustandsparameter aus der Parameter-Gruppe Umgebungstemperatur, Fahrbahnbeschaffenheit, Fahrbahnzustand, Fahrgeschwindigkeit, aktueller Reifenluftdruck, Radlast, und ggf. aktuelles Reifenprofil, wobei die Sensoren mehrere dieser variablen Zustandsparameter in Form von Signalwerten einer Verarbeitungseinheit zuführen, und der Verarbeitungseinheit darüberhinaus parallel mehrere aus einer zweiten Gruppe von nicht veränderbaren Zustandsparametern des Fahrzeugs und der Fahrzeugumgebung in Form von vorgegebenen Festwerten zur Verfügung gestellt werden, insbesondere Zustandsparameter aus der Parameter-Gruppe Mischungsparameter des Reifens, ggf. Reifenprofil, Reifenkontur und -konstruktion, sowie Soll-Luftdruck des Reifens, und wobei die als Signalwerte oder Festwerte in ihrer Gesamtheit nicht relational oder analytisch einen Reibschlußbeiwert beschreibend vorliegenden Zustandsparameter der ersten und der zweiten Gruppe in der Verarbeitungseinrichtung zur Bildung einer oder mehrerer Kennfeldgruppen zueinander in Beziehung gesetzt, im Hinblick auf eine nach einer Anlemphase in den Wechselwirkungen der Kennfeldkonstellationen bzw. Signalparameter- und Festwertkonstellationen untereinander vorhandenen und reproduzierbaren Plausibilität überprüft werden, und danach abhängig von diskreten augenblicklichen Kombinationen von Kennfeldkonstellationen bzw. Signal- und Festwertkonstellationen ein definierter augenblicklich plausibler Reibschlußbeiwert prognostiziert wird, wonach dieser augenblickliche Reibschlußbeiwert einem Fahrzeugregelsystem, beispielsweise einem ABS- oder ESP-System als Start- bzw. Referenzwert vorgegeben wird.

Mit einem solchen Verfahren wird also eine Vielzahl von Kennfeldern / ein Kennfeldsatz aus fakultativ vielen, aber plausiblen und unabhängigen Signalgrößen gebildet, wobei die Konstellation der Kennfelder oder Kennfeldsätze untereinander zu einem Indikator für das Vorliegen eines bestimmten diskreten Reibwertes zwischen Reifen und Fahrbahn verarbeitet werden.

Grundlage des vorgeschlagenen Verfahrens ist also ein bionischer und dem menschlichen Verarbeitungs- und Beurteilungsschema von Umgebungszuständen angenäherter technisierter Ansatz der Signalverarbeitung mit Hilfe von Sensor-Gruppen und intelligenter Signal- und Datenfusion, bei dem eine Vielzahl von Sensorsignalen (Fahrzeuggeschwindigkeit, Beschleunigungen, Straßenzuständer und -rauhigkeiten, Temperaturen, Feuchtigkeit, Straßenverlauf, Abstand von anderen Fahrzeugen, Telematiksignalen etc.) in technischer Art zu einem Indikator für den Reibwert verknüpft werden. Im Ergebnis erhält man einen für Fahrzeugregelungen aktuellen und hinreichend genauen diskreten Reibwert für alle üblichen Umgebungszustände und kann damit in bisher ungekannt präziser Weise Fahrzeugregelungen auf den aktuellen Istzustand der Reibungspaarung zwischen Reifen und Straße anpassen.

Eine vorteilhafte Ausbildung des Verfahrens besteht darin, dass ein oder mehrere der variablen Zustandsparameter in diskreten Stufungen detektiert werden, wobei insbesondere der Zustandsparameter "Fahrbahnbeschaffenheit" in diskreten Stufungen der Fahrbahnrauhigkeit und -textur, der Zustandsparameter "Fahrbahnzustand" in den Stufungen "trocken", "naß" und "vereist", sowie die Zustandsparameter "Temperatur" und Geschwindigkeit in diskreten Bereichen gestuft ermittelt werden. Dies vereinfacht die Signalverarbeitung ohne gleichzeitig die Ermittlung des Indikators für den aktuellen Reibwert in lediglich eine grobe Klasseneinteilung fallen zu lassen.

Eine weitere vorteilhafte Ausbildung des Verfahrens besteht darin, dass die Signalwerte und / oder die Festwerte mindestens teilweise als Telemetriedaten der Verarbeitungseinheit zur Verfügung gestellt werden, insbesondere innerhalb eines zwischen Gruppen von Fahrzeugen aufgebauten dynamischen Netzwerkes. Hierdurch wird die Ermittlung des Indikators für den aktuellen Reibwert wieder und weiter verfeinert und durch Plausibilitätskontrollen abgesichert.

## Patentansprüche

1. Verfahren zur Ermittlung des Kraftschlußbeiwertes zwischen einem Reifen eines Fahrzeuges und der Fahrbahn, bei dem insbesondere am Fahrzeug angeordnete Sensoren mehrere aus einer ersten Gruppe von unterschiedlichen variablen Zustandsparametern des Fahrzeugs und der Fahrzeugumgebung detektieren, insbesondere mehrere Zustandsparameter aus der Parameter-Gruppe
• Umgebungstemperatur,
• Fahrbahnbeschaffenheit,
• Fahrbahnzustand,
• Fahrgeschwindigkeit,
• aktueller Reifenluftdruck,
• Radlast, und ggf.
• aktuelles Reifenprofil,
und bei dem die Sensoren mehrere dieser variablen Zustandsparameter in Form von Signalwerten einer Verarbeitungseinheit zuführen, bei dem der Verarbeitungseinheit darüberhinaus parallel mehrere aus einer zweiten Gruppe von nicht veränderbaren Zustandsparametern des Fahrzeugs und der Fahrzeugumgebung in Form von vorgegebenen Festwerten zur Verfügung gestellt werden, insbesondere Zustandsparameter aus der Parameter-Gruppe
• Mischungsparameter des Reifens,
• ggf. Reifenprofil,
• Reifenkontur und -konstruktion, sowie
• Soll-Luftdruck des Reifens,
und bei dem die als Signalwerte oder Festwerte in ihrer Gesamtheit nicht relational oder analytisch einen Reibschlußbeiwert beschreibend vorliegenden Zustandsparameter der ersten und der zweiten Gruppe in der Verarbeitungseinrichtung zur Bildung einer oder mehrerer Kennfeldgruppen zueinander in Beziehung gesetzt, im Hinblick auf eine nach einer Anlernphase in den Wechselwirkungen der Kennfeldkonstellationen bzw. Signalparameter- und Festwertkonstellationen untereinander vorhandenen und reproduzierbaren Plausibilität überprüft, und danach abhängig von diskreten augenblicklichen Kombinationen von Kennfeldkonstellationen bzw. Signal- und Festwertkonstellationen ein definierter augenblicklich plausibler Reibschlußbeiwert prognostiziert wird, wonach dieser augenblickliche Reibschlußbeiwert einem Fahrzeugregelsystem, beispielsweise einem ABS- oder ESP-System als Start- bzw. Referenzwert vorgegeben wird.

2. Verfahren nach Anspruch 1, **dadurch gekennzeichnet, dass** ein oder mehrere der variablen Zustandsparameter in diskreten Stufungen detektiert werden, wobei insbesondere der Zustandsparameter "Fahrbahnbeschaffenheit" in diskreten Stufungen der Fahrbahnrauhigkeit und -textur, der Zustandsparameter "Fahrbahnzustand" in den Stufungen "trocken", "naß" und "vereist", sowie die Zustandsparameter "Temperatur" und Geschwindigkeit in diskreten Bereichen gestuft ermittelt werden.

3. Verfahren nach Anspruch 2, **dadurch gekennzeichnet, dass** die Signalwerte und / oder die Festwerte mindestens teilweise als Telemetriedaten der Verarbeitungseinheit zur Verfügung gestellt werden, insbesondere innerhalb eines zwischen Gruppen von Fahrzeugen aufgebauten dynamischen Netzwerkes.
